# EUROPEAN PATENT SPECIFICATION

(11) **EP 2 084 090 B1**
(45) Date of publication and mention of the grant of the patent: **01.08.2012**
(21) Application number: 07849019.0
(22) Date of filing: 19.11.2007
(51) Int. Cl.: B65G 65/06, B65G 67/60

(54) **GROUP FOR COLLECTING LOOSE MATERIAL FROM THE HOLD OF A SHIP AND/OR FROM STORAGE CRATES, AND UNLOADER USING THE SAME**
EINHEIT ZUM SAMMELN VON LOSEM MATERIAL AUS DEM LADERAUM EINES SCHIFFS UND/ODER AUS LAGERKÄSTEN, UND DIESE VERWENDENDE ENTLADEVORRICHTUNG
GROUPE POUR COLLECTER UN MATÉRIAU EN VRAC À PARTIR DE LA CALE D'UN BATEAU ET/OU À PARTIR DE CAISSES DE STOCKAGE, ET DÉCHARGEUR ASSOCIÉ

(30) Priority: 24.11.2006 IT MI20062250
(43) Date of publication of application: 05.08.2009
(73) Proprietor: Tenova S.p.A., 20149 Milano (IT)
(72) Inventor: BONIFACIO, Filippo, 16014 Campomorone (Genova) (IT); DE CAPITANI DI VIMERCATE, Ernesto, 16131 Genova (IT)
(74) Representative: Mati, Silvia
(86) International application number: PCT/IB2007/003891
(87) International publication number: WO 2008/062308

(56) References cited:
- EP-A- 1 318 960
- BE-A6- 1 008 669
- DE-A1- 2 758 699
- GB-A- 1 190 354

## Description

The present invention relates to a group for collecting loose materials from a hold of a ship and/or from storage crates according to the preamble of claim 1 and an unloader using the same. Such a group is disclosed in DE 2 758 699 A. The transporting of loose materials, such as coal, coke, minerals, bauxite, calibrated products and so forth, is currently mainly effected by ship. Once they have reached their destination, the loose materials loaded in the hold of ships must be removed and collected to be sent to the site of use.

For this purpose various systems have been conceived for the collection of these materials and their subsequent unloading onto local means of transport, by land and/or water.

Continuous Ship Unloaders (CSU) using continuous collecting groups are in fact known, which have evident advantages with respect to the traditional bucket unloaders.

This group for the continuous collection of material takes the material from the bottom of the hold and lifts it above the hatchway. The part remaining in the moving plant of the continuous unloader transfers the material, by means of a conveyor generally consisting, for this type of plant, of a belt, from the collecting group to the first transfer point on board the machine and in a raised position with respect to the wharf.

In particular, the known continuous collecting groups can be divided into two types: 1) with a single device for collecting the material and transporting it in an elevated position, and 2) a two-component device, therefore comprising a scraping device or scraper and an elevating device or elevator which can be activated independently. The known two-component collecting device resembles that of a single device as the subgroups are generally rigidly connected. It is thus just a duplication of moving units whose technology offers insignificant performances.

A first known collecting group with a single device is equipped with a scraping element having a rigid foot with cup and/or chain guides, wherein all the operating maneuvers are limited to an extremely circumscribed pick-up range, influenced by the various dimensions of the hatchway of the ship hold. The operations can consequently only be effected with maneuvering groups on board the machine which are difficult to be automated.

In a second collecting group with a single device, known with European patent application EP 0 799 782 owned by the Applicant, the scraping element with a rigid foot can be extended. In order to extend the excavating part, it is necessary to compensate with a reduction in the elevation of the vertical part of the group.

During the pick-up/unloading operation, the intervention of various maneuvering groups distributed both on board the machine and on the group itself, is therefore necessary. Automation is consequently difficult also with this type of embodiment.

Furthermore, a third known collecting group with a single device envisages a scraping element in the form of an articulated foot which is more adaptable to the working surface but has the same operational limitations as the known collecting groups mentioned above.

Finally, patent application EP 1 318 960 owned by the Applicant describes a two-component collecting group in which the scraping device, rigidly constrained to the elevating device, is extendible.

The known collecting groups are not without drawbacks.

In particular, also in the case of two-component unloading groups, in order to allow the scraper to rotate to reach the whole surface of the hold, the elevator must also be piloted in rotation. This is due to the rigid connection between the two devices in the known collecting groups.

Document DE 27 58 699 describes a scraping device for a loose material collecting group, rotationally constrained around a vertical axis by means of a rotating element between said scraping device and an elevating device suitable for collecting said material and transporting it upwards. DE 27 58 699, also, discloses a rotating element which is placed near to the foot of the elevating device. The described scraping device can assume a horizontal work position and a vertical rest position thanks to a mechanical or hydraulic operated rod that connects the elevating device and the scraping device.

The rotation of the elevating device implies the so-called "rotating transfer" of material situated on the upper part of the elevator and called rotating plate and/or rotating extractor. This particular form for transferring material collected and lifted towards the remaining part of the moving plant is the cause of dust emissions and the irregular flow of the material transported, in addition to maintenance problems.

Furthermore, the known two-component collecting groups do not offer great reliability as they require a plurality of complex activations which make automation of the device extremely difficult.

These known devices are consequently not capable of offering sufficient operating safety for the operator, whose work is extremely demanding during all the collecting and unloading phases.

In addition, the known two-component collecting groups do not guarantee simple substitution of the excavating part which is rigidly constrained to the lifting part. The substitution of the excavating part is advisable as it always allows excavating parts with an optimized geometry to be used in relation to the physical properties of the materials to be unloaded and different dimensions of the holds and/or to effect a simple substitution in the case of breakdown.

Finally, the known collecting groups have considerable weights mainly on high capacity machines with a consequent significant weight of the machine itself and therefore high overall operating costs.

A general objective of the present invention is to solve the drawbacks mentioned above of the known art in an extremely simple, economical and particularly functional way.

Another objective is to provide a group for collecting loose material which is extremely simple and flexible and which offers a low environmental impact.

A further objective of the present invention is to conceive a group for collecting loose material which can be easily piloted to allow its automation.

In view of the above objectives, according to the present invention, a group for collecting loose material has been conceived, having the features specified in claim 1. A continuous unloader using the collecting group according to the invention, has also been conceived according to claim 12.

The structural and functional features of the present invention and its advantages with respect to the known art will appear more evident from the following description, referring to the enclosed drawings, which show a group for collecting loose material produced according to the innovative principles of the invention itself.

In the drawings:
- figure 1 shows a raised view of one of the continuous ship unloaders using the collecting group of loose material according to the present invention;
- figure 2 is an enlarged representation of the scraping device of the collecting group of figure 1;

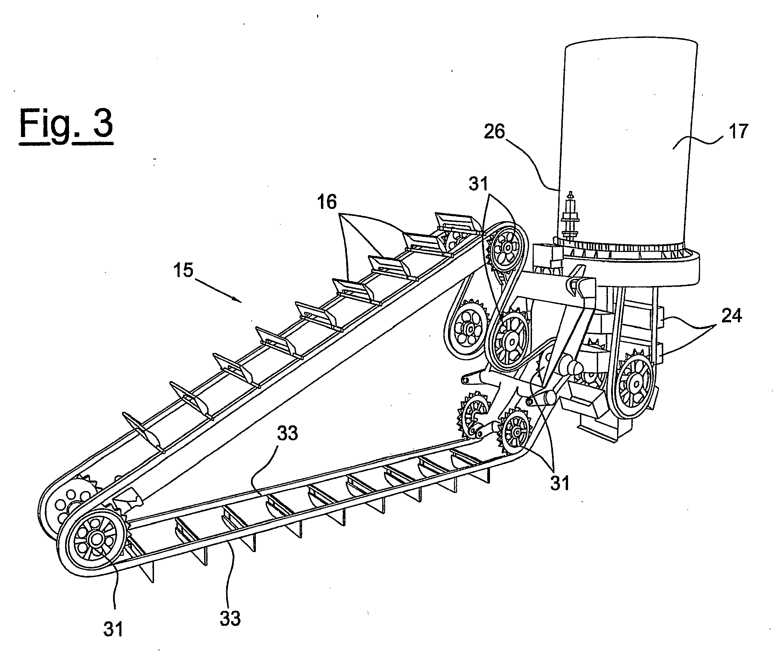

- figure 3 is a perspective view of the scraping device of the collecting group of figure 1, in which, for the sake of illustrative simplicity, some of the elements have been omitted.

With reference to the drawings, a group for collecting loose material, object of the invention, is indicated as a whole with 10 and comprises a scraping device or scraper 15, 15' whose function is to move loose or fluid-like material 12 towards a central area of a hold 13 of a ship 11, and an elevator or elevating device 17 for lifting the loose material 12 and transferring it outside the hold 13 through an upper central opening 14 commonly called hold hatchway.

Downstream of the collecting group 10, there is a transporting device 19 for evacuating the material 12, consisting for example of a conveyor belt. Said conveyor 19 can also be produced as a single device with the elevator 17 of the collecting group 10.

The invention envisages a movable supporting structure 21 arranged on a supporting framework which carries the group 10 and moves it, by lifting it and lowering it through the hatchway 14.

Downstream of the conveyor 19 there is a transfer group 28 equipped with a hopper which conveys the loose material 12 coming from the conveyor 19 to the collection point 25 situated on the wharf 27.

The scraping device 15, 15' is of the extendible type and is provided with particular scraping blades 16, 16'.

The elevator 17 is constrained by means of pins and rods to the supporting arm 21, and in the proximity of its lower part, it sustains the scraping device 15, 15', by means of a particular rotating element 18.

The rotating element 18 is equipped with a rotation bearing or a rotating group thus allowing the scraping device 15, 15' to completely and continuously rotate around the elevator 17 by 360°, in both rotation directions.

By rotating around the elevator 17, the scraping device 15, 15' transfers the loose material 12, with its blades, in the proximity of the elevator 17 where it is collected by cup elements 24 with which the elevator 17 is equipped.

The transferal of the material 12 from the scraping device 15, 15' to the elevator 17 takes place by means of a plough element 20, in which the ploughs 20 are arranged laterally with respect to the scraping device 15, 15'. Said ploughs 20 convey the loose material 12 which has been brought in the proximity and deposited by the scraping devices 15, 15', to the foot of the elevator 17.

A levelling device 22 of the scraper 15, 15' is also envisaged, which, with the combined action of the rotating element 18, facilitates the filling of the cup containers 24 of the elevator 17.

The transferal of the material from the elevator 17 to the conveyor 19 is effected by means of a chute 23 which guides the material collected 12 onto the conveyor belt 19.

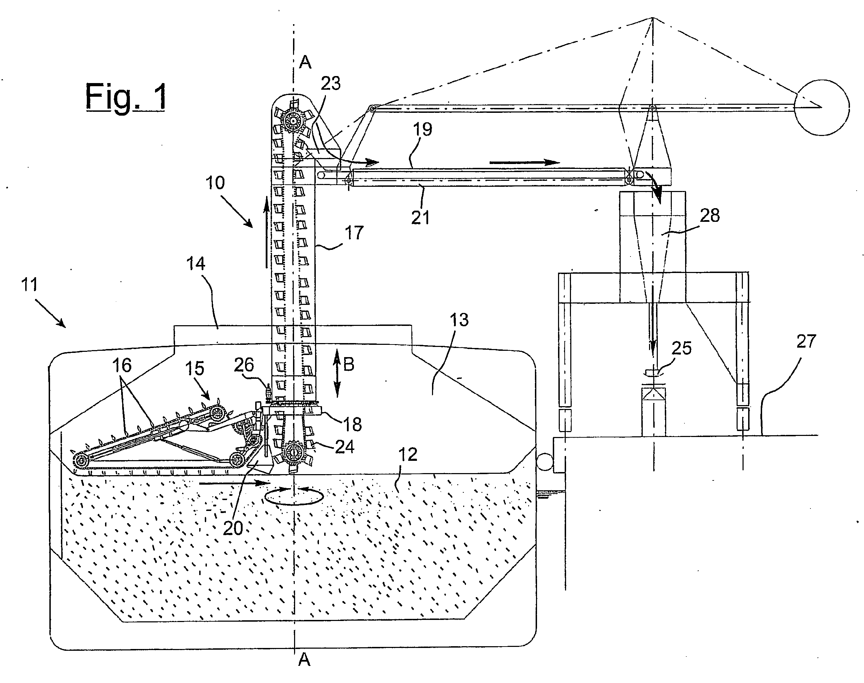

The elevator 17 can be vertically moved when lifting and lowering along the direction indicated in figure 1 by the double arrow B through a specific maneuver of the moveable arm 21. By combining said movement with the rotating movement of the scraper 15, 15' around the vertical axis A of the elevator 17, a pick-up effect of the material 12 is obtained, which takes place on a sloping and/or horizontal plane.

During the rotating movement around the elevator 17, the scraper 15, 15' can be lengthened or shortened by the distance necessary for covering the whole surface of the hold, by suitable moving means 30 having a combined automated movement.

In this way, the scraper 15, 15' is capable of reaching both the material 12 in contact with the walls of the hold 13, and the material 12 lying in the corners of the hold 13.

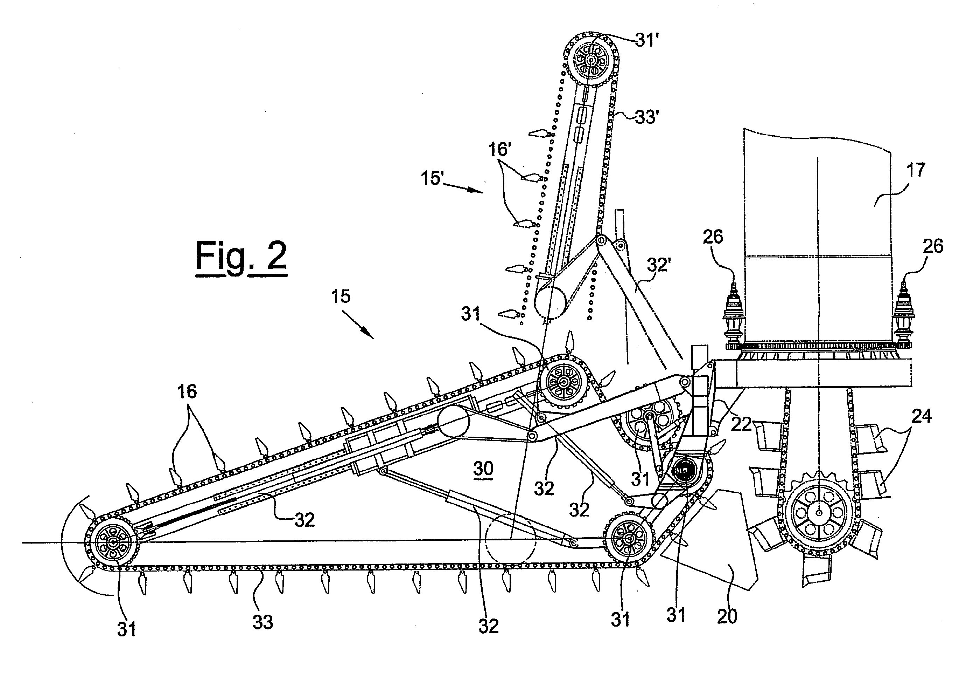

Said moving means 30 comprise five pairs of cogwheels 31, 31', connected to each other by means of moveable and extendible arms 32, 32' and around which pairs of chains 33, 33' are wound. The chains 33, 33' are forced to follow a closed loop track which has a substantially horizontal development, when the scraper is brought by the moving means 30 to an extended configuration 15, and a prevalent vertical development, when the moving means 30 bring the scraper to a retracted configuration 15', partially illustrated in figure 2 with a dashed line.

With each complete rotation of the scraper 15, 15', a layer of material 12 having an extension equal to the plan view surface of the hold is consequently removed.

The moving means 30 of the scraper are driven by a hydraulic and/or mechanical driving group 26 which allows corners and edges of the hold to be reached with a more rapid elongation.

The vertical maneuvering of the collecting group 10 can be effected at the end of every cycle and/or contemporaneously with the rotation of the scraper 15, 15' with a downward or horizontal screw pickup defined as "drill" effect. The scraper 15, 15' can therefore collect the material as far as the bottom of the hold.

The collecting group 10, divided into a scraper 15, 15' and elevator 17, allows the same group to have a greater flexibility in collecting material 12 having various physical characteristics and in operations and maneuvering in geometrically different ship holds.

As the devices 15, 15', 17 of the collecting group 10 are independent and autonomous with respect to each other, above all in the various operating processes, they allow a greater driving simplicity which enables automation. It is in fact possible to envisage a specific automation for the scraper 15, 15' alone. This provides greater operating convenience as it is no longer necessary to effect particular operative adaptation maneuvers of the scraper 15 on the part of the operator.

Furthermore, with the particular collecting group 10 according to the invention, the rotating plate necessary in the known collecting groups is eliminated, it being virtually transferred to the base of the elevator 17.

This leads to a constructive simplification for the nature of the transfer itself, the elimination of particular and costly mechanisms, a reduction in the lifting height of the materials and consequently a reduction in the length of the elevator and lifting power.

A reduction in noisy emissions is also obtained due to the absence of the rotating extraction system, in addition to a reduction in dust emissions as they occur inside the hold 13. This also leads to a reduction in the quantity of material lost in the unloading phase.

Finally, the fact that the elevator 17 of the collecting group 10 according to the invention has the sole function of lifting the material collected, the elevator 17 is simplified from an operational and kinematical point of view and can therefore be lighter and constructively simpler with respect to the known devices or it can be as a single device with the conveyor 19.

From what is described above with reference to the figures, it is evident how a group for collecting loose material according to the invention is particularly useful and advantageous. The objective specified in the preamble of the description is therefore achieved.

In addition to the evident advantages, resulting from the particular characteristics described above, the scraper of the collecting group according to the present invention, is of the interchangeable and replaceable type, as it is equipped with rapid connections.

This characteristic gives the collecting group greater flexibility as the scraper 15 can be easily and rapidly substituted with different scrapers, available on the wharf, which are more adequate for the different dimensions of the holds and/or various qualities of the material to be unloaded.

There is also an increased efficiency as said scraper 15 can be replaced in short times, for example in the case of damage and/or breakdown during the pickup operation and consequently with a substantial reduction in onerous machine stoppages.

There are also the following additional advantages:
- the extendibility of the scraper allows material to be collected over the whole surface of the hold, including the corners;
- the pick-up surface is more or less square and/or rectangular, and not, on the contrary, circular, as in the case of other machines which do not have the horizontal extension of the scraper or foot of the elevator; the scraper can easily and rapidly reach the edges of the contour of the ship hold;
- the continuous collection of the material over the whole surface of the hold allows a consistent pick-up efficiency and consequently an optimum unloading efficiency, in this way the use of an auxiliary mechanical blade can be limited to very brief and small final cleaning operations at the bottom of the hold, and no longer to the moving of huge quantities of residual material;
- the continuous collection of the scraper along the contour of the hold eliminates the danger of the uncontrollable collapsing of non-removed material, causing overloading of the collecting group, machine stoppages and prolonged unloading times as the operating cycle must be interrupted to manually remove the collapsed material; the result is a relaxed operation and better flow of the material in the whole conveying system on the machine and consequently a more rational dimensioning of all the conveying groups of the machine itself;
- as the scraper can have the geometries illustrated in the figures, it can already operate efficiently at the beginning of the hold as the scraping part can tilt downwards or upwards and therefore handle the heaped material which is present at every initial unloading operation of the hold.

The embodiments of the group for collecting loose material according to the invention, as also the materials, can naturally differ from those shown for purely illustrative and non-limiting purposes in the drawings.

In particular, the invention does not only relate to continuous ship unloaders of the medium and high capacity mechanical type and for medium-large vessels. The invention can also be equally applied as a collecting group for the holds of so-called self-unloading ships as they are equipped with their own moving and unloading system of loose material.

Furthermore, a continuous unloader using the collecting group according to the present invention can also be used for the unloading of loose material from storage crates.

The scope of protection of the invention is therefore delimited by the appended claims.

## Claims

1. A group (10) for collecting loose or substantially fluid-like material (12) comprising a scraping device (15, 15') suitable for conveying said material (12) towards an elevating device (17) in turn suitable for collecting said material (12) and transporting it upwards, said scraping device (15, 15') being rotatably constrained around a vertical axis (A) of said elevating device (17) by means of a rotating connecting element (18) between said elevating device (17) and said scraping device (15, 15'), said scraping device (15, 15') comprising moving means (30) suitable for moving said scraping device from an extended configuration (15) to a retracted configuration (15') **characterized in that** said moving means (30) comprise five pairs of cogwheels (31, 31') connected to each other by means of movable and extendible arms (32, 32'), a pair of chains (33, 33') being wound around said cogwheels (31, 31').

2. The collecting group (10) according to claim 1, **characterized in that** said rotating element (18) is situated in the proximity of the foot of said elevating device (17).

3. The collecting group (10) according to claim 1 or 2, **characterized in that** said scraping device (15, 15') is of the extendible type.

4. The collecting group (10) according to any one of the previous claims, **characterized in that** said moving means (30) are driven by at least one specific hydraulic and/or mechanical driving group (26).

5. The collecting group (10) according to one of the previous claims, **characterized in that** said scraping device (15, 15') comprises a plurality of scraping blades (16, 16').

6. The collecting group (10) according to one of the previous claims, **characterized in that** at said elevating device (17), said scraping device (15) is connected to a plough device (20).

7. The collecting group (10) according to one of the previous claims, **characterized in that** said elevating device (17) comprises a plurality of cup containers (24) for collecting and conveying said material (12).

8. The collecting group (10) according to one of the previous claims, **characterized in that** said elevating device (17) is movable in lifting and lowering along a vertical direction (B).

9. The collecting group (10) according to one of the previous claims, **characterized in that** said elevating device (17) comprises, in correspondence with its upper end, a chute (23) for the unloading of said material (12).

10. The collecting group (10) according to claim 9, **characterized in that** said elevating device (17) comprises a conveyor belt (19) situated downstream of said chute (23).

11. The collecting group (10) according to one of the previous claims, **characterized in that** said scraping device (15) comprises a levelling device (22).

12. A continuous ship unloader comprising a supporting structure (21) situated on a movable framework (29), said supporting structure (21) supporting a group (10) for collecting loose or substantially fluid-like material (12) according to any of the previous claims, downstream of said collecting group (10) there being a conveying device (19) suitable for receiving said material (12) collected by said group (10) and conveying it to a transfer group equipped with a hopper (28).

13. The continuous ship unloader according to claim 12, **characterized in that** said elevating device (17) of said collecting group (10) is constrained to said supporting structure (21).

14. The continuous ship unloader according to claim 12 or 13 combined with claim 10, **characterized in that** said conveying device (19) is integrated in said collecting group (10).

## Patentansprüche

1. Einheit (10) zum Sammeln von losem oder im wesentlichen flüssigkeitsähnlichem Material (12), mit einer Schabereinrichtung (15, 15'), die zum Fördern des Materials (12) zu einer Hebeeinrichtung (17) geeignet ist, die wiederum dazu geeignet ist, das Material (12) zu sammeln und es aufwärts zu transportieren, wobei die Schabereinrichtung (15, 15') drehbar um eine Vertikalachse (A) der Hebeeinrichtung (17) festgelegt ist mittels eines drehbaren Verbindungsbauteils (18) zwischen der Hebeeinrichtung (17) und der Schabereinrichtung (15, 15'), wobei die Schabereinrichtung (15, 15') eine Verfahreinrichtung (30) aufweist, die zum Bewegen der Schabereinrichtung aus einem ausgefahrenen Zustand (15) in einen eingezogenen Zustand (15') geeignet ist, **dadurch gekennzeichnet, dass** die Verfahreinrichtung (30) fünf Paar Zahnräder (31, 31') aufweist, die miteinander mittels beweglicher und ausfahrbarer Arme (32, 32') verbunden sind, wobei ein Paar Ketten (33, 33') um die Zahnräder (31, 31') gewunden ist.

2. Sammeleinheit (10) nach Anspruch 1, **dadurch gekennzeichnet, dass** das drehbare Bauteil (18) in der Nähe des Fußes der Hebeeinrichtung (17) angeordnet ist.

3. Sammeleinheit (10) nach Anspruch 1 oder 2, **dadurch gekennzeichnet, dass** die Schabereinrichtung (15, 15') vom ausfahrbaren Typ ist.

4. Sammeleinrichtung (10) nach einem der vorhergehenden Ansprüche, **dadurch gekennzeichnet, dass** die Verfahreinrichtung (30) von zumindest einer speziellen hydraulischen und/oder mechanischen Antriebseinheit (26) angetrieben ist.

5. Sammeleinheit (10) nach einem der vorhergehenden Ansprüche, **dadurch gekennzeichnet, dass** die Schabereinheit (15, 15') eine Vielzahl Schaberklingen (16, 16') aufweist.

6. Sammeleinheit (10) nach einem der vorhergehenden Ansprüche, **dadurch gekennzeichnet, dass** die Schabereinrichtung (15) an der Hebeeinrichtung (17) mit einer Pflugeinrichtung (20) verbunden ist.

7. Sammeleinheit (10) nach einem der vorhergehenden Ansprüche, **dadurch gekennzeichnet, dass** die Hebeeinrichtung (17) eine Vielzahl Becherbehälter (24) zum Sammeln und Fördern des Materials (12) aufweist.

8. Sammeleinheit (10) nach einem der vorhergehenden Ansprüche, **dadurch gekennzeichnet, dass** die Hebeeinrichtung (17) längs einer Vertikalrichtung (B) anhebbar und absenkbar ist.

9. Sammeleinheit (10) nach einem der vorhergehenden Ansprüche, **dadurch gekennzeichnet, dass** die Hebeeinrichtung (17) in Ausrichtung mit ihrem oberen Ende einen Auswurfschacht (23) zur Abgabe des Materials (12) aufweist.

10. Sammeleinheit (10) nach Anspruch 9, **dadurch gekennzeichnet, dass** die Hebeeinrichtung (17) ein stromabwärts des Auswurfschachts (23) angeordnetes Förderband (19) aufweist.

11. Sammeleinheit (10) nach einem der vorhergehenden Ansprüche, **dadurch gekennzeichnet, dass** die Schabereinrichtung (15) eine Nivelliereinrichtung (22) aufweist.

12. Kontinuierlicher Schiffsentlader, mit einer Stützkonstruktion (21), die auf einem beweglichen Rahmen (29) angeordnet ist, wobei die Stützkonstruktion (21) eine Einheit (10) zum Sammeln von losem oder im wesentlichen flüssigkeitsähnlichem Material (12) gemäß einem der vorhergehenden Ansprüche abstützt, wobei stromabwärts der Sammeleinheit (10) eine Fördereinrichtung (19) vorhanden ist, die zum Aufnehmen des von der Einheit (10) gesammelten Materials (12) und Fördern desselben zu einer mit einem Trichter (28) ausgerüsteten Übertragungseinheit geeignet ist.

13. Kontinuierlicher Schiffsentlader nach Anspruch 12, **dadurch gekennzeichnet, dass** die Hebeeinrichtung (17) der Sammeleinheit (10) an der Stützkonstruktion (21) festgelegt ist.

14. Kontinuierlicher Schiffsentlader nach Anspruch 12 oder 13 in Kombination mit Anspruch 10, **dadurch gekennzeichnet, dass** die Fördereinrichtung (19) in die Sammeleinheit (10) integriert ist.

## Revendications

1. Groupe (10) de collecte d'un matériau en vrac ou substantiellement fluide (12) comprenant un dispositif de raclage (15, 15') adapté pour amener ledit matériau (12) vers un dispositif élévateur (17) lui-même adapté pour collecter ledit matériau (12) et le transporter vers le haut, ledit dispositif de raclage (15, 15') étant contraint en rotation autour d'un axe vertical (A) dudit dispositif élévateur (17) au moyen d'un élément de connexion rotatif (18) entre ledit dispositif élévateur (17) et ledit dispositif de raclage (15, 15'), ledit dispositif de raclage (15, 15') comprenant un moyen de déplacement (30) adapté pour déplacer ledit dispositif de raclage d'une configuration étendue (15) à une configuration rétractée (15'), **caractérisé en ce que** ledit moyen de déplacement (30) comprend cinq paires de roues dentées (31, 31') connectées entre elles par des bras mobiles et extensibles (32, 32'), une paire de chaînes (33, 33') étant enroulée autour desdites roues dentées (31, 31').

2. Groupe de collecte (10) selon la revendication 1, **caractérisé en ce que** ledit élément rotatif (18) est situé à proximité du pied dudit dispositif élévateur (17).

3. Groupe de collecte (10) selon la revendication 1 ou 2, **caractérisé en ce que** ledit dispositif de raclage (15, 15') est du type extensible.

4. Groupe de collecte (10) selon l'une quelconque des revendications précédentes, **caractérisé en ce que** ledit moyen de déplacement (30) est entraîné par au moins un groupe d'entraînement spécifique hydraulique et/ou mécanique (26).

5. Groupe de collecte (10) selon l'une des revendications précédentes, **caractérisé en ce que** ledit dispositif de raclage (15, 15') comprend une pluralité de lames de raclage (16, 16').

6. Groupe de collecte (10) selon l'une des revendications précédentes, **caractérisé en ce que** au niveau dudit dispositif élévateur (17), ledit dispositif de raclage (15) est connecté à un dispositif déflecteur (20).

7. Groupe de collecte (10) selon l'une des revendications précédentes, **caractérisé en ce que** ledit dispositif élévateur (17) comprend une pluralité de godets (24) pour collecter et transporter ledit matériau (12).

8. Groupe de collecte (10) selon l'une des revendications précédentes, **caractérisé en ce que** ledit dispositif élévateur (17) est mobile en montée et en descente le long d'une direction verticale (B).

9. Groupe de collecte (10) selon l'une des revendications précédentes, **caractérisé en ce que** ledit dispositif élévateur (17) comprend, en correspondance avec son extrémité supérieure, une goulotte (23) pour le déchargement dudit matériau (12).

10. Groupe de collecte (10) selon la revendication 9, **caractérisé en ce que** ledit dispositif élévateur (17) comprend une bande transporteuse (19) située en aval de ladite goulotte (23).

11. Groupe de collecte (10) selon l'une des revendications précédentes, **caractérisé en ce que** ledit dispositif de raclage (15) comprend un dispositif de nivellement (22).

12. Appareil de déchargement de navires à fonctionnement continu comprenant une structure de support (21) située sur un châssis mobile (29), ladite structure de support (21) supportant un groupe (10) de collecte de matériau en vrac ou substantiellement fluide (12) selon l'une quelconque des revendications précédentes, en aval dudit groupe de collecte (10) se trouvant un dispositif de transport (19) adapté pour recevoir ledit matériau (12) collecté par ledit groupe (10) et pour le transporter jusqu'à un groupe de transfert équipé d'une trémie (28).

13. Appareil de déchargement de navires à fonctionnement continu selon la revendication 12, **caractérisé en ce que** ledit dispositif élévateur (17) dudit groupe de collecte (10) est assujetti sur ladite structure de support (21).

14. Appareil de déchargement de navires à fonctionnement continu selon la revendication 12 ou 13 associée à la revendication 10, **caractérisé en ce que** ledit dispositif de transport (19) est intégré audit groupe de collecte (10).
